# EUROPEAN PATENT SPECIFICATION

(11) **EP 1 609 805 B1**
(45) Date of publication and mention of the grant of the patent: **17.10.2012**
(21) Application number: 04711555.5
(22) Date of filing: 17.02.2004
(51) Int. Cl.: C08F 10/06, C08F 4/02, C08F 4/651, C08F 4/649, C08F 4/654

(54) **COMPLEX SUPPORT SUITABLE FOR PROPYLENE POLYMERIZATION CATALYST, A CATALYST COMPONENT AND CATALYST CONTAINING THE SAME**
KOMPLEXER TRÄGER FÜR PROPYLENPOLYMERISATIONSKATALYSATOR, KATALYSATORKOMPONENTE UND KATALYSATOR DAMIT
SUPPORT COMPLEXE POUR CATALYSEUR DE POLYMERISATION DU PROPYLENE, COMPOSANT DE CATALYSEUR ET CATALYSEUR CONTENANT CE COMPOSANT

(30) Priority: 24.02.2003 CN 03105214; 20.08.2003 CN 03153662
(43) Date of publication of application: 28.12.2005
(73) Proprietor: China Petroleum & Chemical Corporation, Beijing 100029 (CN); Beijing Research Institute of Chemical Industry, China Petroleum &Chemical Corporation, Beijing 100013 (CN)
(72) Inventor: CHEN, Wei, Beijing 100013 (CN); ZHANG, Tianyi, Beijing 100013 (CN); DU, Hongbin, Beijing 100013 (CN); XIA, Xianzhi, Beijing 100013 (CN); ZHANG, Tongxuan, Beijing 100013 (CN); YAN, Lixin, Beijing 100013 (CN); WANG, Yisen, Beijing 100013 (CN); WANG, Xinsheng, Beijing 100013 (CN); LI, Jiyu, Beijing 100013 (CN); GAO, Ping, Beijing 100013 (CN); YIN, Maoping, Beijing 100013 (CN); YU, Luqing, Beijing 100013 (CN); MA, Qingshan, Beijing 100013 (CN); WANG, Xiaodong, Beijing 100013 (CN)
(74) Representative: Basfeld, Rainer
(86) International application number: PCT/CN2004/000126
(87) International publication number: WO 2004/074329

(56) References cited:
- EP-A- 0 584 626
- EP-A- 0 661 301
- EP-A1- 0 778 295
- EP-A2- 0 413 469
- WO-A-2004/007562
- DE-A1- 4 128 829
- JP-A- 2001 122 612
- US-A- 5 895 770
- US-A1- 2004 010 101

## Description

### Technical field

The present invention relates to a composite carrier of catalysts for olefin polymerization, in particular for propylene polymerization, to catalyst components and catalysts comprising the same.

### Technical background

It is well known that high activity supported type of Ziegler-Natta catalysts have been broadly used in homopolymerization of ethylene or propylene, and copolymerization of ethylene or propylene with other alpha-olefins. In the disclosed patent techniques, high activity supported catalysts typically utilize magnesium chloride as single carrier. In order to enhance catalytic activity, magnesium chloride carrier is prepared by various physical or chemical processes at first, and then a transition metal compound and optionally an electron donor compound are supported on said carrier to form catalytic active center. This type of catalysts can be classified as particulate (non-spheric) catalyst and spheric catalyst in terms of particle morphology. US4784983 and US4861847 disclose a particulate catalyst, which is obtained by preparing particulate essentially consisting of magnesium chloride through dissolving-coprecipitating process, and then treating said particulate with a titanium halide and an electron donor compound. When used in olefin polymerization, especially in propylene polymerization, said catalyst exhibits high polymerization activity and stereospecificity. However, due to the limitation of particle morphology of the catalyst, it is very difficult to obtain high impact resistent copolymer having high ethylene content when the catalyst is used in propylene copolymerization. This is a common characteristic of this type of particulate catalysts. EP0395083 discloses a catalyst for olefin polymerization, which is a high activity spheric catalyst obtained by preparing a magnesium chloride-alcohol-adduct spheric carrier through a reaction of magnesium chloride and an aliphatic alcohol, and then supporting a titanium halide and an electron donor compound on said spheric carrier. When used in propylene polymerization, this spheric catalyst exhibits high activity and stereospecificity, and obtained polymer particles have good morphology. The catalyst can be used to prepare high impact resistent ethylene-propylene copolymer having high ethylene content. However, since this kind of catalysts generally have a large particle size, breaking phenomenon is likely to occur during polymerization. This is especially true when prepolymerization times is lower. Thus produced polymer fines will affect stable operation of a polymerization unit.

Another type of catalysts are those olefin polymerization catalysts obtained by loading magnesium chloride on porous inorganic oxide support such as silica and the like to form a composite carrier, and then treating the composite carrier with a titanium halide and an electron donor compound. For example, GB2028347 discloses a process for preparing a catalyst component supported on porous inorganic oxide support, namely, impregnating silica support with magnesium chloride solution, then evaporating solvent, and reacting thus obtained solid product with a transition metal compound, in particular a titanium compound. For another example, CN1035186C discloses a technique for preparing high activity polypropylene catalysts utilizing silica support, wherein the catalyst product is obtained by dispersing porous silica support having hydroxyl on surface thereof in a solution of magnesium chloride in tetrahydrofuran, drying said suspension to form a MgCl₂/SiO₂ composite carrier, and then treating said carrier with titanium tetrachloride and an electron donor compound. Said catalysts exhibit, however, lower activity. For instance, when diisobutyl phthalate is used as internal electron donor, 2 hours polymerization activity of said catalyst in propylene polymerization is at most 20kgPP/gCat. Such technique for preparing composite carrier type of catalysts through impregnating process is also disclosed in many other patents, for example, US5559071, US5625015, WO94/14855, WO94/14856, WO95/11263, WO95/15216, WO95/12622, WO96/16093, WO96/05236, WO97/23518, WO98/01481, WO99/46306, WO00/22011, WO00/40623, WO00/05277 and EP0295312.

However, when used in propylene polymerization, the catalysts prepared using the carrier obtained by above-described process of impregnating silica with magnesium chloride solution exhibit unsatisfied polymerization activity. The reason maybe lies in that such impregnation process controls particle morphology of final catalyst substantially utilizing particle morphology of silica support itself. Since the porous silica support commonly used has a large average particle size, typically about 50 microns, loading amount of active component on said silica support is limited so that the final catalyst exhibits a lower activity.

US4376062 discloses a composite carrier catalyst, which is a catalyst having an average particle size of about 25 microns obtained by contacting anhydrous magnesium chloride with titanium tetrachloride in an electron donor solvent, such as tetrahydrofuran, to react each other to form a slurry or a solution containing active component, then mixing said slurry or solution with fumed silica having an average particle size of from 0.007 to 0.05 microns and spray drying. When used in ethylene polymerization after reacting with an activator (alkyl aluminium), said catalyst exhibits higher polymerization activity. However, for the purpose of use in propylene polymerization, addition of internal electron donor is necessary in order to obtain polypropylene having high isotacticity, while above-described preparation process is not in favor of stably controlling the composition of individual component on the carrier. In addition, since a large amount of titanium tetrachloride is contained in the slurry to be spray dried, the spray dryer is likely to be eroded, and this goes against industrial production.

### Summary of the invention

One object of the invention is to provide a composite carrier of catalysts for propylene polymerization, comprising magnesium halide and silica material with an average particle size of less than 1 microns.

Another object of the invention is to provide a composite carrier of catalysts for propylene polymerization, which is spheric particles obtainable by contacting magnesium halide with one or more electron donor compounds to form a solution, then mixing the solution with silica material having an average particle size of less than 1 microns to form a mixture, and drying the mixture through spray drying process.

Still another object of the invention is to provide a catalyst component for propylene polymerization, comprising reaction product of the composite carrier according to the present invention and a titanium compound represented by formula Ti(OR²)₄₋ₘXₘ, in which R² groups are identical or different, and are C₁₋₁₄ aliphatic hydrocarbyl, X(s) is/are selected from the group consisting of F, Cl, Br and mixture thereof, m is an integer of from 1 to 4, wherein prior to, during, or after the reaction between the composite carrier and the titanium compound, the composite carrier is treated using an internal electron donor compound.

Still another object of the invention is to provide a catalyst component for propylene polymerization, which is obtainable through a process comprising the steps of:
(i)preparing spheric composite carrier by contacting magnesium halide with one or more electron donor compounds to form a solution, then mixing the solution with silica material having an average particle size of less than 10 microns to form a mixture, and drying the mixture through spray drying process;
(ii)reacting the composite carrier prepared in step (i) with a titanium compound represented by formula Ti(OR²)₄₋ₘXₘ, in which R² group(s) is/are identical or different, and are C₁₋₁₄ aliphatic hydrocarbyl, X(s) is/are selected from the group consisting of F, Cl, Br and mixture thereof, m is an integer of from 1 to 4, and
(iii) prior to, during, or after the reaction between the composite carrier and the titanium compound, treating the composite carrier with an internal electron donor compound selected from the group consisting of esters of aliphatic polycarboxylic acid, esters of aromatic carboxylic acid, and 1,3-diether compounds having a general formula (I) 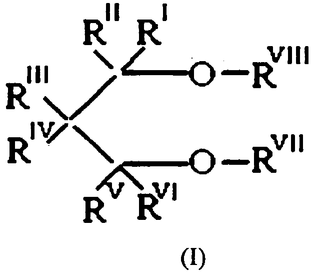
in which R^{I}, R^{II}, R^{III}, R^{IV}, R^{V} and R^{VI} are identical or different, and are selected from the group consisting of hydrogen, halogen, optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl, R^{VII} and R^{VIII} are identical or different, and are selected from the group consisting of optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl, and R^{I} - R^{VI} groups can be bonded each other to form a ring, and mixture thereof.

Still another object of the invention is to provide a catalyst for propylene polymerization, comprising reaction product of the solid catalyst component according to present invention, an alkyl aluminium compound and optionally, an external electron donor component.

When used in olefin polymerization, in particular in propylene polymerization, the catalysts according to the present invention exhibit high activity and high stereospecificity, and can be used to prepare high impact resistent ethylene-propylene copolymer having high ethylene content.

### Detailed description of the invention

In the first aspect, the present invention provides a composite carrier of catalysts for propylene polymerization, comprising magnesium halide and silica material with an average particle size of less than 10 microns. Said composite carrier is spheric particles obtainable by contacting magnesium halide with one or more electron donor compounds to form a solution, then mixing the solution with silica material with an average particle size of less than 10 microns to form a mixture, and drying the mixture through spray drying process.

Magnesium halides useful in the present invention can be represented by formula Mg(OR¹)₂₋ₘXₘ, in which R¹(s) is/are identical or different, and is/are linear, branched or cyclic alkyl having 1 to 14 carbon atoms, X(s) is/are selected from the group consisting of F, Cl, Br and mixture thereof, and m is 1 or 2. Examples include, but are not limited to, magnesium dichloride, magnesium dibromide, magnesium phenoxide chloride, magnesium isopropoxide chloride, magnesium butoxide chloride, and the like, with magnesium dichloride being preferred. The magnesium halide can be used alone or in combination.

Suitable electron donor compounds useful to dissolve the magnesium halide include optionally halogenated aliphatic or aromatic alcohols, aliphatic ethers, cyclic ethers, aliphatic ketones, alkyl esters of aliphatic or aromatic carboxylic acid. Optionally halogenated saturated aliphatic alcohol having from 1 to 8 carbon atoms; lower alkyl ester of saturated aliphatic carboxylic acid having from 1 to 4 carbon atoms; lower alkyl ester of aromatic mono- or poly-carboxylic acid having from 7 to 8 carbon atoms; aliphatic ether having from 2 to 8, preferably from 4 to 5 carbon atoms; cyclic aliphatic ether having from 4 to 5 carbon atoms, preferably monoether or diether having 4 carbon atoms; and aliphatic ketone having from 3 to 6, preferably from 4 to 5 carbon atoms are especially suitable. The term "lower "alkyl" as used herein intends to means alkyl having from 1 to 6 carbon atoms.

Preferably, the electron donor compound is a system comprising at least one of optionally halogenated C₁₋₈ aliphatic alcohols and optionally halogenated C₇₋₁₀ aromatic alcohols. More preferably, the electron donor compound is at least one of optionally halogenatedC₁₋₈ aliphatic alcohols and optionally halogenated C₇₋₁₀ aromatic alcohols, or a mixture of said alcohol with a C₁₋₆ aliphatic ether, a C₃₋₅ cyclic ether, or a C₁₋₆ alkyl ester of aliphatic or aromatic carboxylic acid.

Examples of the electron donor compound include, but are not limited to, methanol, ethanol, isopropanol, n-butanol, iso-butanol, iso-pentanol, n-octanol, iso-octanol, ethylene glycol, propylene glycol, chloroethanol, trichloroethanol, diethyl ether, dibutyl ether, methyl formate, ethyl acetate, butyl acetate, dihexyl ether, tetrahydrofuran (THF), acetone, methyl isobutyl ketone, ethyl benzoate, diethyl phthalate, di-n-butyl phthalate, di-iso-butyl phthalate, and the like, with ethanol, isopropanol, n-butanol, trichloroethanol, THF, ethyl benzoate, and diethyl phthalate being preferred. The electron donor can be used alone or in combination.

Suitable electron donor compounds also include those systems comprising an organic epoxy compound and/or an organo phosphorus compound. The organic epoxy compound is at least one selected from the group consisting of aliphatic epoxy compound or diepoxy compound, halogenated aliphatic epoxy compound or diepoxy compound, and glycidol ether, having from 2 to 8 carbon atoms. Examples include epoxy ethane, epoxy propane, epoxy butane, vinyl epoxy ethane, butadiene dioxide, epoxy chloropropane, glycidyl methyl ether, and diglycidyl ether. The organo phosporus compound is selected from the group consisting of C₁₋₁₀ hydrocarbyl or C₁₋₁₀ halohydrocarbyl esters of phosphoric acid or phosphorous acid. Examples include trimethyl phosphate, triethyl phosphate, tributyl phosphate, triphenyl phosphate, trimethyl phosphite, triethyl phosphite, tributyl phosphite, tribenzyl phosphite.

In order to react the magnesium halide with the electron donor to form a homogeneous solution, per mole of the magnesium halide needs typically from 3 to 50 moles, preferably from 6 to 30 moles of the electron donor compound. Such solution can be prepared in presence of an inert organic solvent, which does not form an adduct with the magnesium halide. Said inert solvent is preferably C₅₋₁₂ alkane, C₁₋₆ halohydrocarbon, or C₆₋₁₂ aromatic hydrocarbon, such as, hexane, heptane, dichloroethane, toluene, xylene, and ethyl benzene, and the like.

In order to obtain composite carrier having less particle size through spray drying, the silica material selected is fumed silica having an average particle size of less than 1 micron. This kind of silica has typically a specific surface area of 150 to 250 m²/g.

A slurry suitable for spray drying can be obtained by mixing said solution and said silica. In general, silica is added in an amount of from 10 to 200 grams of silica per liter of the solution.

Spray drying can be carried out as follows: performing spray drying by passing, together with an inert drying gas, the slurry obtained by mixing said solution and said silica material through a spray dryer, to obtain spheric solid particles.

In order to apply the composite carrier according to the present invention more well to prepare catalysts for propylene polymerization, it is generally desired that said composite carrier is spheric particles having an average particle size of from 5 to 60 microns, preferably from 10 to 40 microns, and more preferably from 12 to 30 microns.

In the second aspect, the present invention provides a catalyst component for propylene polymerization, comprising reaction product of the composite carrier described above and a titanium compound represented by formula Ti(OR²)₄₋ₘXₘ, in which R² group(s) is/are identical or different, and is/are C₁₋₁₄ aliphatic hydrocarbyl, X(s) is/are selected from the group consisting of F, Cl, Br and mixture thereof, m is an integer of from 1 to 4, wherein prior to, during, or after the reaction between the composite carrier and the titanium compound, the composite carrier is treated with an internal electron donor compound.

Specifically, the titanium compound can be one or more selected from the group consisting of titanium tetrachloride, titanium tetrabromide, titanium tetraiodide, tetrabutyl titanate, tetraethyl titanate, triethoxy titanium chloride, diethoxy titanium dichloride, ethoxy titanium trichloride, and titanium trichloride, with titanium tetrachloride being preferred. The titanium compound should be miscible in an apolar solvent at the application temperature.

Various internal electron donor compounds known in the art can be used to treat the composite carrier. Suitable internal electron donor compounds include esters of aliphatic polycarboxylic acid, and esters of aromatic carboxylic acid, for example, phthalates, malonates, succinates, glutarates, pivalates, carbonates, and the like. Examples include diethyl malonate, dibutyl malonate, diethyl 2,3-diisopropylsuccinate, diisobutyl 2,3-diisopropylsuccinate, di-n-butyl 2,3-diisopropylsuccinate, dimethyl 2,3-diisopropylsuccinate, diisobutyl 2,2-dimethylsuccinate, diisobutyl 2-ethyl-2-methylsuccinate, diethyl 2-ethyl-2-methylsuccinate, diethyl adipate, dibutyl adipate, diethyl sebate, dibutyl sebate, diethyl phthalate, diisobutyl phthalate, di-n-butyl phthalate, diisooctyl phthalate, diethyl maleate, di-n-butyl maleate, diethyl naphthalene dicarboxylate, dibutyl naphthalene dicarboxylate, triethyl trimellitate, tributyl trimellitate, triethyl hemimellitate, tributyl hemimellitate, tetraethyl benzene-1,2,4,5-tetracarboxylate, tetrabutyl benzene-1,2,4,5-tetracarboxylate, and the like.

In another embodiment of this aspect, prior to, during, or after the reaction between the composite carrier and the titanium compound, the composite carrier is treated with, as internal electron donor compound, at least one 1,3-diether compound having a general formula (I) 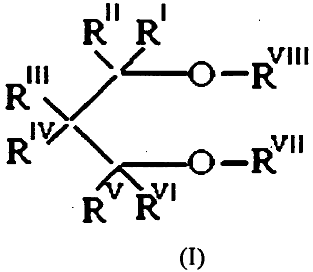 in which R^{I}, R^{II}, R^{III}, R^{IV}, R^{V} and R^{VI} are identical or different, and are selected from the group consisting of hydrogen, halogen, optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl, R^{VII} and R^{VIII} are identical or different, and are selected from the group consisting of optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl, and R^{I} - R^{VI} groups can be bonded each other to form a ring.

When used in propylene polymerization, the catalysts comprising an 1,3-diether compound having the general formula (I) as internal electron donor compound exhibit high polymerization activity, good response to hydrogen, and high stereospecificity, and obtained polymer powders have a large bulk density. Even if no external electron donor (such as silanes) is used during the polymerization, obtained polypropylene may have an isotacticity of up to 98% and a broad molecular weight distribution.

In the 1,3-diether compounds having the general formula (I) useful in the catalyst components according to the present invention, it is preferred that R^{III} and R^{IV} are bonded each other to form an unsaturated fused ring structure, and hydrogen atoms on said fused ring structure are optionally substituted by one or more groups selected from the group consisting of halogen, optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl. More preferably, said 1,3-diether compounds are those compounds represented by general formula (II),

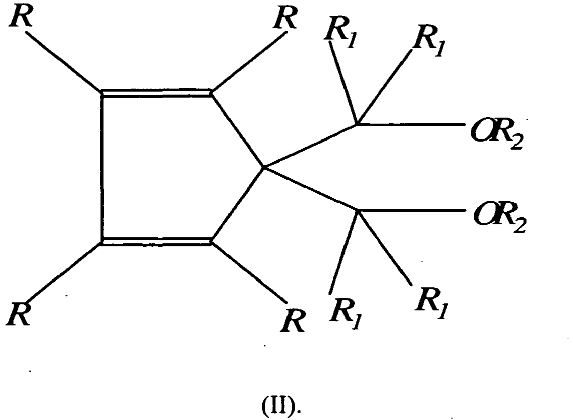

Still more preferably, said 1,3-diether compounds are those compounds represented by general formula (III),

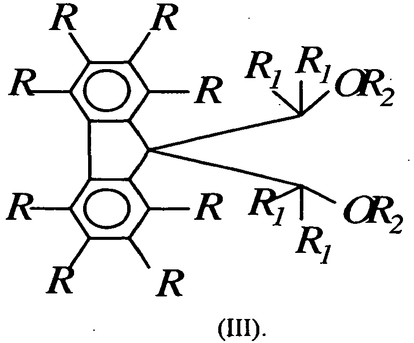

In above formulae (II) and (III), R groups are identical or different, and are selected from the group consisting of hydrogen, halogen, optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl;
R₁ groups are identical or different, and are selected from the group consisting of hydrogen, halogen, optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl;
R₂ groups are identical or different, and are selected from the group consisting of optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl.

Examples of said 1,3-diether compounds having the general formula (I) include:
2-(2-ethylhexyl)-1,3-dimethoxypropane;
2-isopropyl-1,3-dimethoxypropane;
2-butyl-1,3-dimethoxypropane;
2-sec-butyl-1,3-dimethoxypropane;
2-cyclohexyl-1,3-dimethoxypropane;
2-phenyl-1,3-dimethoxypropane;
2-cumyl-1,3-dimethoxypropane;
2-(2-phenylethyl)-1,3-dimethoxypropane;
2-(2-cyclohexylethyl)-1,3-dimethoxypropane;
2-(p-chlorophenyl)-1,3-dimethoxypropane;
2-(diphenylmethyl)-1,3-dimethoxypropane;
2-(1-naphthyl)-1,3-dimethoxypropane;
2-(2-fluorophenyl)-1,3-dimethoxypropane;
2-(1-decahydronaphthyl)-1,3-dimethoxypropane;
2₋(p-tert-butylphenyl)-1,3-dimethoxypropane;
2,2-dicyclohexyl-1,3-dimethoxypropane;
2,2-dicyclopentyl-1,3-dimethoxypropane;
2,2-diethyl-1,3-dimethoxypropane;
2,2-dipropyl-1,3-dimethoxypropane;
2,2-diisopropyl-1,3-dimethoxypropane;
2,2-dibutyl-1,3-dimethoxypropane;
2-methyl-2-propyl-1,3-dimethoxypropane;
2-methyl-2-benzyl-1,3-dimethoxypropane;
2-ethyl-2-methyl-1,3-dimethoxypropane;
2-isopropyl-2-methyl-1,3-dimethoxypropane;
2-methyl-2-phenyl-1,3-dimethoxypropane;
2-methyl-2-cyclohexyl-1,3-dimethoxypropane;
2,2-bis(p-chlorophenyl)-1,3-dimethoxypropane;
2,2-bis(2-cyclohexylethyl)-1,3-dimethoxypropane;
2-isobutyl-2-methyl-1,3-dimethoxypropane;
2-methyl-2-(2-ethylhexyl)-1,3-dimethoxypropane;
2,2-diisobutyl-1,3-dimethoxypropane;
2,2-diphenyl-1,3-dimethoxypropane;
2,2-dibenzyl-1,3-dimethoxypropane;
2,2-bis(cyclohexylmethyl)-1,3-dimethoxypropane;
2-isobutyl-2-isopropyl-1,3-dimethoxypropane;
2-isopropyl-2-(1-methylbutyl)-1,3-dimethoxypropane;
2-(1-methylbutyl)-2-sec-butyl-1,3-dimethoxypropane;
2,2-di-sec-butyl-1,3-dimethoxypropane;
2,2-di-tert-butyl-1,3-dimethoxypropane;
2,2-di-neopentyl-1,3-dimethoxypropane;
2-isopentyl-2-isopropyl-1,3-dimethoxypropane;
2-isopropyl-2-phenyl-1,3-dimethoxypropane;
2-sec-butyl-2-phenyl-1,3-dimethoxypropane;
2-isopropyl-2-benzyl-1,3-dimethoxypropane;
2-sec-butyl-2-benzyl-1,3-dimethoxypropane;
2-benzyl-2-phenyl-1,3-dimethoxypropane;
2-isopropyl-2-cyclopentyl-1,3-dimethoxypropane;
2-sec-butyl-2-cyclopentyl-1,3-dimethoxypropane;
2-isopropyl-2-cyclohexyl-1,3-dimethoxypropane;
2-sec-butyl-2-cyclohexyl-1,3-dimethoxypropane;
2-isopropyl-2-sec-butyl-1,3-dimethoxypropane;
2-cyclohexylmethyl-2-cyclohexyl-1,3-dimethoxypropane;
1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1-bis(methoxymethyl)indene;
1,1-bis(methoxymethyl)-2,3-dimethoxyindene;
1,1-bis(methoxymethyl)-4,5,6,7-tetrafluoroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethylsilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopentylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-2-methyl-7-tert-butylindene;
1,1-bis(methoxymethyl)-7-phenylindene;
1,1-bis(methoxymethyl)-2-phenylindene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzoindene;
9,9-bis(methoxymethyl)-2,3,6,7-dibenzoindene;
9,9-bis(methoxymethyl)-2,7-dicyclopentylfluorene;
9,9-bis(methoxymethyl)-1,8-dichlorofluorene;
9,9-bis(methoxymethyl)-2,7-dicyclohexylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene;
1,1-bis(1-butoxyethyl)-cyclopentadiene;
1,1-bis(1-isopropoxy-n-propyl)-cyclopentadiene;
1-methoxymethyl-1-(1-methoxyethyl)-2,3,4,5-tetramethylcyclopentadiene;
1,1-bis(alpha-methoxybenzyl)indene;
1,1-bis(phenoxymethyl)indene;
1,1-bis(1-methoxyethyl)-5,6-dichloroindene;
1,1-bis(phenoxymethyl)-3,6-dicyclohexylindene;
1-methoxymethyl-1-(1-methoxyethyl)-7-tert-butylindene;
1,1-bis[2-(2-methoxypropyl)]-2-methylindene;
9,9-bis(alpha-methoxybenzyl)fluorene;
9,9-bis(1-isopropoxy-n-butyl)-4,5-diphenylfluorene;
9,9-bis(1-methoxyethyl)fluorene;
9-(methoxymethyl)-9-(1-methoxyethyl)-2,3,6,7-tetrafluorofluorene;
9-(methoxymethyl)-9-(pentoxymethyl)fluorene;
9-(methoxymethyl)-9-(ethoxymethyl)fluorene;
9-(methoxymethyl)-9-(1-methoxyethyl)fluorene;
9-(methoxymethyl)-9-[2-(2-methoxypropyl)]fluorene;
1,1-bis(methoxymethyl)-2,5-cyclohexadiene;
1,1-bis(methoxymethyl)benzonaphthalene;
7,7-bis(methoxymethyl)-2,5-norbornadiene;
9,9-bis(methoxymethyl)-1,4-methanedihydronaphthalene;
9,9-bis(methoxymethyl)-9,10-dihydroanthracene;
1,1-bis(methoxymethyl)-1,2-dihydroanthracene;
4,4-bis(methoxymethyl)-1-phenyl-1,4-dihydronaphthalene;
4,4-bis(methoxymethyl)-1-phenyl-3,4-dihydronaphthalene;
5,5-bis(methoxymethyl)-1,3,6-cycloheptatriene,
and the like.

According to a specific embodiment, the solid catalyst component according to the present invention can be prepared as follows:

### (i) Preparation of magnesium chloride solution:

The magnesium chloride solution can be prepared by some methods known in the art. For instance, the magnesium chloride solution can be prepared utilizing a dissolving system of magnesium chloride as disclosed in US4784983 and US4861847.

In the present invention, the magnesium chloride solution can be preferably prepared as follows:

To a reactor equipped with a stirrer, an alcohol or a mixture of two or more alcohols is added, optionally followed by further addition of ether(s) or ester(s). Anhydrous magnesium chloride is then added and is dissolved with heating, wherein molar ratio of the alcohol(s) to magnesium chloride is in a range of from 3:1 to 50:1, and molar ratio of the ether(s) or ester(s) to magnesium chloride is in a range of from 0:1 1 to 20:1. The dissolution of magnesium chloride can be carried out in presence of an inert organic solvent, with the amount of the inert solvent used being in a range of from 0 to 20 ml per gram of MgCl₂.

### (ii) Preparation of spheric MgCl₂/SiO₂ composite carrier

Silica, preferably fumed silica having an average particle size of less than 1 microns is added to the magnesium chloride solution at an amount of from 0.1 to 2.0 grams of silica with respect to one gram of magnesium chloride. Then the mixture is stirred for from 0.5 to 3 hours at a temperature of from 10 to 100°C to form a slurry. Next, spray drying is carried out by passing the slurry together with an inert drying gas through a spray dryer to obtain spheric MgCl₂/SiO₂ composite carrier having an average particle size of from 5 to 60 microns. Inlet temperature of the spray dryer is controlled at from 80 to 300 °C, and outlet temperature of the spray dryer is controlled at from 50 to 200 °C. Typically, the composite carrier has a composition of
MgCl₂: from 20% to 60% (by weight);
SiO₂: from 10% to 60% (by weight);
Alcohol(s): from 5% to 40% (by weight);
Ether(s) or ester(s): from 0 to 20% (by weight);
Inert solvent(s): less than 5% (by weight).

### (iii) Preparation of solid catalyst component

The above-obtained spheric carrier is suspended in cooled TiCl₄ with TiCl₄ being used at an amount of from 12 to 16 ml per gram of the carrier. The suspension is slowly heated to a temperature of from 100 to 120 °C over a period of from 1 to 3 hours, while an internal electron donor compound is added at an amount of from 0.05 to 0.25 mole with respect to one mole of magnesium chloride during heating. Filtration is performed after reacting for 1 to 2 hours. Optionally, an amount of TiCl₄ is further added, and the mixture is held at 120 °C for 1 to 2 hours, followed by filtering out the liquid. Residual solid is washed with an inert solvent such as hexane, then the solid is dried at a temperature of from 30 to 50 °C under vacuum to give a solid catalyst component according to the present invention.

In the third aspect, the present invention relates to a catalyst for propylene polymerization, comprising reaction product of:
(i) the solid catalyst component according to the present invention (active component);
(ii) alkyl aluminium compound component, which is represented by formula AlR³ₙX₃₋ₙ, in which R³(s) is/are identical or different, and is/are linear, branched, or cyclic alkyl having 1 to 20 carbon atoms, X(s) is/are halogen, n=1, 2 or 3, with triethyl aluminium, triisobutyl aluminium, tri-n-butyl aluminium,tri-n-hexyl aluminium, tri-n-octyl aluminium, alkyl aluminium chloride such as diethyl aluminium chloride, and the like being preferred, and the alkyl aluminium compound being used alone or in combination; and
(iii) optionally, an external electron donor compound, for example, mono- or multi-functional carboxylic acids, carboxylic acid anhydrides and carboxylic acid esters, ketones, ethers, alcohols, lactones, organo phosphorus compounds and organosilicone compounds, with organosilicone compounds, such as those represented by formula R⁴nSi(OR⁵)₄₋ₙ in which n is in a range of from 0 to 3 inclusive, R⁴(s) and R⁵(s) are identical or different, and are alkyl, cycloalkyl, aryl or haloalkyl, R⁴(s) can also be halogen or hydrogen atom, being preferred.

In many cases, for example in the case of using aforementioned esters of aliphatic polycarboxylic acid or esters of aromatic carboxylic acid as internal electron donor, use of an external electron donor is very important.

For instance, in the case of using an aforementioned organosilicone compound as external electron donor, ratio of solid catalyst component (i) to alkyl aluminium compound component (ii) to external electron donor component (iii) is in a range of 1:5 to 1000:0 to 500, calculated on molar basis of titanium, aluminium and silicone.

It is possible to contact the component (ii) and the optional component (iii), separately or as a mixture of said two components, with the active component.

The term "polymerization" as used herein intends to include homopolymerization and copolymerization. The term "polymer" as used herein intends to include homopolymer, copolymer and terpolymer.

The catalysts of the invention can be used in the homopolymerization of propylene and copolymerization of propylene and alpha-olefins such as ethylene, 1-butene, 4-methyl-1-pentene, 1-hexene, and 1-octene, and optionally diolefin. In particular, said catalysts can be used to produce, such as, the following products: elastomeric copolymer of ethylene and propylene, and elastomeric terpolymers of ethylene and propylene as well as diolefins at a small porportion, wherein the weight content of the units derived from ethylene is between about 30% and 70%; isotactic polypropylene and crystalline copolymer of propylene and ethylene and/or other alpha-olefins, wherein the content of the units derived from propylene is higher than 85% by weight (random copolymer); impact resistent propylene polymer, which are produced by sequential polymerization of propylene and the mixture of propylene and ethylene, with the content of ethylene being up to 40% by weight; copolymer of propylene and 1-butene, containing a great amount, such as from 10 to 40 percent by weight, of units derived from 1-butene.

The catalysts of the invention can be used in various known olefin polymerization processes, including continuous polymerization and batch polymerization. For instance, the polymerization can be carried out in slurry with inert hydrocarbon solvents as diluent or in bulk with liquid monomers, such as propylene, as reaction media. Alternatively, the polymerization may be carried out in gas phase in one or more fluidized-bed or mechanically agitated bed reactors.

The polymerization reaction is generally carried out at a temperature of from 0 to 150°C, typically from 20 to 120°C, more typically from 40 to 100°C. When the polymerization is carried out in gas phase, operation pressure is usually in a range of from 0.5 to 10 MPa (absolute pressure, the same hereinafter), preferably from 1 to 5 MPa. The operation pressure in bulk polymerization is usually in a range of from 1 to 6MPa, preferably from 1.5 to 4MPa. Hydrogen or other compounds which act as chain-transfer agent can be used to control the molecular weight of polymers.

Compared with the technique of directly preparing a solid catalyst component through spray drying as disclosed in US4376062, the present invention can control the composition of solid catalyst product more well, in particular, the present invention can expediently adjust content and kind of the internal electron donor contained in said solid catalyst component, and this is important for ensuring higher stereospecificity of the catalysts according to the present invention. Furthermore, since the catalyst according to the present invention comprises silica having primary particles with very small particle size, and exhibits very high polymerization activity, it can more effectively avoid the occurrence of fish eye phenomenon than those prepared by impregnating process when used in production of a film grade product. Moreover, since the catalyst according to the present invention comprises particles with ,plenty of micropore structure, and possesses homogeneously distributed active component, it exhibits good copolymerization performance so that it can be used to prepare high impact resistent propylene copolymer having high ethylene content, and is suitable for gas phase process of propylene polymerization. The catalyst according to the present invention is particularly suitable for gas phase process of propylene polymerization.

### Embodiments of the Invention

The following examples further describe the invention, but do not make limitation to the invention in any way.

### Example 1

### 1. Preparation of magnesium chloride solution:

To a 350ml glass reactor equipped with a stirrer, which was completely replaced with N₂, 34.5ml of ethanol, 18.5ml of n-butanol and 32.4ml of THF were added successively. 9.5g of anhydrous magnesium chloride was added with stirring while controlling temperature inside the glass reactor not raising rapidly, then the temperature inside the glass reactor was slowly raised to about 60 °C, and the anhydrous magnesium chloride was well dissolved with stirring. After the anhydrous magnesium chloride was substantially dissolved, the system was held at that temperature for further 2.5 hours to form a magnesium chloride solution.

### 2. Preparation of composite carrier

To above solution was added 6g of fumed silica (TS-610 with particle size in a range of from 0.02 to 0.1 micron, available from Cabot Corporation, the same hereinafter). Then the mixture was stirred for 1 hour at room temperature to form a slurry. Next, spray drying was carried out in a spray dryer with inlet temperature of the spray dryer being controlled at 200 °C and outlet temperature of the spray dryer being controlled at 130°C, to form spheric composite carrier having an average particle size of about 17 microns. The composite carrier was found to have a composition of MgCl₂: 43.3%; SiO₂: 26.5%; ethanol: 11.2%; n-butanol:14.7%, THF:4.2%, calculated on weight basis.

### 3. Preparation of solid catalyst component

9.1 g of above-obtained composite carrier was slowly added to 100m of TiCl₄ pre-cooled to 0 °C. The mixture was heated to 40°C over one hour, and 1.0ml of di-n-butyl phthalate (DNBP) was added at said temperature. Then the mixture was heated to 100°C over 0.5 hour and held at that temperature for 2 hours, followed by filtering out mother liquid. Additional 100m of TiCl₄ was added to the reactor, and the content was heated to 120°C over 0.5 hour and held at that temperature for 1 hour, followed by filtering out mother liquid. Residual solid was washed with hexane at 60 °C for 5 times with the amount of hexane used being 60ml at each time. Finally, the solid was dried to give a solid catalyst component.

### Propylene polymerization:

To a 5L autoclave, which had been purged with propylene gas at 70 °C for one hour, were introduced with 5ml of 0.5mmol/ml solution of AlEt₃ in hexane, 1ml of 0.1mmol/ml solution of cyclohexylmethyldimethoxysilane (CHMMS) in hexane, 8.5mg of above-prepared solid spheric catalyst component in 10ml of dried hexane, and 1.7NL of hydrogen, followed by introduction of 1.5Kg of liquid propylene. The reactor was heated to 70°C with stirring over 5 minutes, and the polymerization was performed at that temperature and autogenous pressure for 2 hours. After stopping the stirrer, un-polymerized propylene mononer was removed, and the temperature inside the reactor was reduced to room temperature.

310g of PP powder was obtained. Isotacticity index (I.I.) of the polypropylene was found as 96.0%, melt index (M.I.) was found as 5.1g/10min, catalyst activity was 36.5KgPP per gram of solid catalyst component, and bulk density of the polymer was 0.42g/ml.

### Example 2

### 1. Preparation of magnesium chloride solution:

To a 350ml glass reactor equipped with a stirrer, which was completely replaced with N₂, 34.5ml of ethanol and 45.5ml of isopropanol were added successively. 9.5g of anhydrous magnesium chloride was added with stirring while controlling temperature inside the glass reactor not raising rapidly, then the temperature inside the glass reactor was slowly raised to about 75 °C, and the anhydrous magnesium chloride was well dissolved with stirring. After the anhydrous magnesium chloride was substantially dissolved, the system was held at that temperature for further 2.5 hours to form a magnesium chloride solution.

### 2. Preparation of composite carrier

To above solution was added 5g of fumed silica. Then the mixture was stirred for 1 hour at room temperature to form a slurry. Next, spray drying was carried out in a spray dryer with inlet temperature of the spray dryer being controlled at 190°C and outlet temperature of the spray dryer being controlled at 110 °C, to form spheric composite carrier having an average particle size of about 19 microns. The composite carrier was found to have a composition of MgCl₂: 45.7%; SiO₂: 24.1%; ethanol: 13.3%; isopropanol: 16.7%, calculated on weight basis.

### 3. Preparation of solid catalyst component

A solid catalyst component was prepared according to the procedure as described in Example 1.

### Propylene polymerization:

The procedure of propylene polymerization was same as that described in Example 1. Catalyst activity was 38.0Kg of PP per gram of solid catalyst component, isotacticity index (I.I.) of the obtained polypropylene was found as 96.6%, melt index (M.I.) was found as 5.2g/10min, and bulk density of the polymer was 0.43g/ml.

### Example 3

### 1. Preparation of magnesium chloride solution:

To a 350ml glass reactor equipped with a stirrer, which was completely replaced with N₂, 23.0ml of ethanol and 36.0ml of n-butanol were added successively. 9.5g of anhydrous magnesium chloride was added with stirring while controlling temperature inside the glass reactor not raising rapidly, then the temperature inside the glass reactor was slowly raised to about 70 °C, and the anhydrous magnesium chloride was well dissolved with stirring. After the anhydrous magnesium chloride was substantially dissolved, the system was held at that temperature for further 2.5 hours to form magnesium chloride solution.

### 2. Preparation of composite carrier

The procedure described in Example 1 was repeated to give spheric composite carrier having an average particle size of about 17 microns. The composite carrier was found to have a composition of MgCl₂: 47.5%; SiO₂: 23.2%; ethanol: 5.9%; n-butanol:23.5%, calculated on weight basis.

### 3. Preparation of solid catalyst component

A solid catalyst component was prepared according to the procedure as described in Example 1.

### Propylene polymerization:

The procedure of propylene polymerization was same as that described in Example 1. Catalyst activity was 25.1Kg of PP per gram of solid catalyst component, isotacticity index (I.I.) of the obtained polypropylene was found as 96.8%, melt index (M.I.) was found as 3.0g/10min, and bulk density of the polymer was 0.42g/ml.

### Example 4

### 1. Preparation of magnesium chloride solution:

To a 350ml glass reactor equipped with a stirrer, which was completely replaced with N₂, 46.0ml of ethanol, 15.6ml of epoxy chloropropane and 32.4ml of THF were added successively. 9.5g of anhydrous magnesium chloride was added with stirring while controlling temperature inside the glass reactor not raising rapidly, then the temperature inside the glass reactor was slowly raised to about 60 °C, and the anhydrous magnesium chloride was well dissolved with stirring. After the anhydrous magnesium chloride was substantially dissolved, the system was held at that temperature for further 2.5 hours to form magnesium chloride solution.

### 2. Preparation of composite carrier

The procedure described in Example 1 was repeated to prepare spheric composite carrier having an average particle size of about 18 microns. The composite carrier was found to have a composition of MgCl₂: 48.6%; SiO₂: 25.2%; ethanol: 16.8%; epoxy chloropropane: 3.6%, THF:5.9%, calculated on weight basis.

### 3. Preparation of solid catalyst component

A solid catalyst component was prepared according to the procedure as described in Example 1.

### Propylene polymerization:

The procedure of propylene polymerization was same as that described in Example 1. Catalyst activity was 11.6Kg of PP per gram of solid catalyst component, isotacticity index (I.I.) of the obtained polypropylene was found as 96.5%, melt index (M.I.) was found as 3.6g/10min, and bulk density of the polymer was 0.43g/ml.

### Example 5

### 1. Preparation of magnesium chloride solution:

To a 350ml glass reactor equipped with a stirrer, which was completely replaced with N₂, 34.5ml of ethanol and 45.5ml of isopropanol were added successively. 9.5g of anhydrous magnesium chloride was added with stirring while controlling temperature inside the glass reactor not raising rapidly, then the temperature inside the glass reactor was slowly raised to about 75 °C, and the anhydrous magnesium chloride was well dissolved with stirring. After the anhydrous magnesium chloride was substantially dissolved, 0.2ml of ethyl benzoate was added to the solution, then the system was held at that temperature for further 2.5 hours to form magnesium chloride solution.

### 2. Preparation of composite carrier

The procedure described in Example 2 was repeated to prepare spheric composite carrier having an average particle size of about 18 microns. The composite carrier was found to have a composition of MgCl₂: 46.1%; SiO₂: 24.3%; ethanol: 13.3%; isopropanol: 16.3%, ethyl benzoate: 0.02%, calculated on weight basis.

### 3. Preparation of solid catalyst component

A solid catalyst component was prepared according to the procedure as described in Example 1.

### Propylene polymerization:

The procedure of propylene polymerization was same as that described in Example 1. Catalyst activity was 42.0Kg of PP per gram of solid catalyst component, isotacticity index (I.I.) of the obtained polypropylene was found as 97.4%, melt index (M.I.) was found as 3.6g/10min, and bulk density of the polymer was 0.43g/ml.

### Example 6

### 1. Preparation of magnesium chloride solution:

To a 350ml glass reactor equipped with a stirrer, which was completely replaced with N₂, 80ml of toluene, 8.2ml of tributyl phosphate, 7.8ml of epoxy chloropropane and 4.8g of anhydrous magnesium chloride were added successively. Then the temperature inside the glass reactor was slowly raised to about 55°C, and the anhydrous magnesium chloride was well dissolved with stirring. After the anhydrous magnesium chloride was substantially dissolved, the system was held at that temperature for further 2.5 hours to form a magnesium chloride solution.

### 2. Preparation of composite carrier

To above solution was added 3.5g of fumed silica. Then the mixture was stirred for 1 hour at room temperature to form a slurry. Next, spray drying was carried out in a spray dryer with inlet temperature of the spray dryer being controlled at 200 °C and outlet temperature of the spray dryer being controlled at 130 °C, to prepare a spheric composite carrier having an average particle size of about 18 microns.

### 3. Preparation of solid catalyst component

A solid catalyst component was prepared according to the procedure as described in Example 1.

### Propylene polymerization:

The procedure of propylene polymerization was same as that described in Example 1. Catalyst activity was 26.0Kg of PP per gram of solid catalyst component, isotacticity index (I.I.) of the obtained polypropylene was found as 96.5%, melt index (M.I.) was found as 3.1g/10min, and bulk density of the polymer was 0.41g/ml.

### Example 7

### 1. Preparation of magnesium chloride solution:

To a 350ml glass reactor equipped with a stirrer, which was completely replaced with N₂, 150m of ethanol and 9.5g of anhydrous magnesium chloride were added successively. Then the temperature inside the glass reactor was slowly raised to about 50 °C, and the anhydrous magnesium chloride was well dissolved with stirring. After the anhydrous magnesium chloride was substantially dissolved, the system was held at that temperature for further 2.5 hours to form a magnesium chloride solution.

### 2. Preparation of composite carrier

To above solution was added 6g of fumed silica: Then the mixture was stirred for 1 hour at room temperature to form a slurry. Next, spray drying was carried out in a spray dryer with inlet temperature of the spray dryer being controlled at 190 °C and outlet temperature of the spray dryer being controlled at 110 °C, to prepare spheric composite carrier having an average particle size of about 16 microns.

### 3. Preparation of solid catalyst component

A solid catalyst component was prepared according to the procedure as described in Example 1.

### Propylene polymerization:

The procedure of propylene polymerization was same as that described in Example 1. Catalyst activity was 23.0Kg of PP per gram of solid catalyst component, isotacticity index (I.I.) of the obtained polypropylene was found as 96.0%, melt index (M.I.) was found as 7.2g/10min, and bulk density of the polymer was 0.42g/ml.

### Example 8

### 1. Preparation of magnesium chloride solution:

To a 350ml glass reactor equipped with a stirrer, which was completely replaced with N₂, 34.5ml of ethanol, 18.5ml of n-butanol and 32.4ml of THF were added successively. 9.5g of anhydrous magnesium chloride was added with stirring while controlling temperature inside the glass reactor not raising rapidly, then the temperature inside the reactor was slowly raised to about 60 °C, and the anhydrous magnesium chloride was well dissolved with stirring. After the anhydrous magnesium chloride was substantially dissolved, the system was held at that temperature for further 2.5 hours to form a magnesium chloride solution.

### 2. Preparation of composite carrier

To above solution was added 6g of fumed silica. Then the mixture was stirred for 1 hour at room temperature to form a slurry. Next, spray drying was carried out in a spray dryer with inlet temperature of the spray dryer being controlled at 200 °C and outlet temperature of the spray dryer being controlled at 130 °C, to form spheric composite carrier having an average particle size of about 17 microns.

### 3. Preparation of catalyst component

9.1g of above-obtained composite carrier was slowly added to 100m of TiCl₄ pre-cooled to 0 °C. The mixture was heated to 40 °C over one hour, and 4.7mmol of 2-isopentyl-2-isopropyl-1,3-dimethoxypropane was added at said temperature. Then the mixture was heated to 100 °C over 0.5 hour and held at that temperature for 2 hours, followed by filtering out mother liquid. Additional 100m of TiCl₄ was added to the reactor, and the content was heated to 120°C over 0.5 hour and held at that temperature for 1 hour, followed by filtering out mother liquid. Residual solid was washed with hexane at 60 °C for 5 times with the amount of hexane used being 60ml at each time. Finally, the solid was dried to give a solid catalyst component. In said catalyst component, the content of magnesium was 13.2% by weight, the content of titanium was 3.3% by weight, and the content of 2-isopentyl-2-isopropyl-1,3-dimethoxypropane was 8.8% by weight.

### Propylene polymerization:

To a 5L autoclave, which had been purged with propylene gas at 70 °C for one hour, were introduced with 5ml of 0.5mmol/ml solution of AlEt₃ in hexane, 1ml of 0.1mmol/ml solution of cyclohexylmethyldimethoxysilane (CHMMS) in hexane, 8.0mg of above-prepared solid spheric catalyst component in 10ml of hexane, and 1.7NL of hydrogen, followed by introduction of 1.5Kg of liquid propylene. The reactor was heated to 70°C with stirring over 5 minutes, and the polymerization was performed at that temperature and autogenous pressure for 2 hours. After stopping the stirrer, un-polymerized propylene mononer was removed, and the temperature inside the reactor was reduced to room temperature.

370g of PP powder was removed from the autoclave. Isotacticity index (I.I.) of the polypropylene was found as 98.0%, melt index (M.I.) was found as 5.1g/10min, and molecular weight distribution (Mw/Mn) was found as 7.1. Catalyst activity was 46.3Kg of PP per gram of solid catalyst component, and bulk density of the polymer was 0.43g/ml.

### Example 9

The preparation of magnesium chloride solution, composite carrier and catalyst component follows the procedure as described in Example 8.

Propylene polymerization was carried out according to the procedure as described in Example 8, except that no external electron donor was added. Catalyst activity was 51.5Kg of PP per gram of solid catalyst component, and bulk density of the polymer was 0.42g/ml. Isotacticity index (I.I.) of the obtained polypropylene was 94.3%, melt index (M.I.) was 6.2g/10min, and molecular weight distribution (Mw/Mn) was 7.0.

### Example 10

### 1. Preparation of magnesium chloride solution:

To a 350ml glass reactor equipped with a stirrer, which was completely replaced with N₂, 34.5ml of ethanol and 45.5ml of isopropanol were added successively. 9.5g of anhydrous magnesium chloride was added with stirring while controlling temperature inside the glass reactor not raising rapidly, then the temperature inside the glass reactor was slowly raised to about 75 °C, and the anhydrous magnesium chloride was well dissolved with stirring. After the anhydrous magnesium chloride was substantially dissolved, the system was held at that temperature for further 2.5 hours to form a magnesium chloride solution.

### 2. Preparation of composite carrier

To above solution was added 5g of fumed silica. Then the mixture was stirred for 1 hour at room temperature to form a slurry. Next, spray drying was carried out in a spray dryer with inlet temperature being controlled at 190 °C and outlet temperature being controlled at 110°C, to form a spheric composite carrier having an average particle size of about 19 microns.

### 3. Preparation of solid catalyst component

A solid catalyst component was prepared according to the procedure as described in Example 8.

### Propylene polymerization:

The procedure of propylene polymerization was same as that described in Example 8. Catalyst activity was 54.0Kg of PP per gram of solid catalyst component, and bulk density of the polymer was 0.42g/ml. Isotacticity index (I.I.) of the obtained polypropylene was found as 97.6%, melt index (M.I.) was found as 5.2g/10min, and molecular weight distribution (Mw/Mn) was 7.3.

### Example 11

The preparation of magnesium chloride solution, composite carrier and catalyst component follows the procedure as described in Example 10.

Propylene polymerization was carried out according to the procedure as described in Example 10, except that no external electron donor was added. Catalyst activity was 60.0Kg of PP per gram of solid catalyst component, and bulk density of the polymer was 0.40g/ml. Isotacticity index (I.I.) of the obtained polypropylene was found as 93.8%, melt index (M.I.) was found as 6.3g/10min, and molecular weight distribution (Mw/Mn) was 7.3.

### Example 12

Example 8 was repeated, except that 9,9-bis(methoxymethyl)fluorene was used to substitute 2-isopentyl-2-isopropyl-1,3-dimethoxypropane.

Catalyst activity was 54.2Kg of PP per gram of solid catalyst component, and bulk density of the polymer was 0.43g/ml. Isotacticity index (I.I.) of the obtained polypropylene was found as 97.8%, melt index (M.I.) was found as 4.0g/10min, and molecular weight distribution (Mw/Mn) was 7.6.

### Example 13

Example 12 was repeated, except that no external electron donor was added during propylene polymerization.

Catalyst activity was 62.4Kg of PP per gram of solid catalyst component, and bulk density of the polymer was 0.40g/ml. Isotacticity index (I.I.) of the obtained polypropylene was found as 92.8%, melt index (M.I.) was found as 5.3g/10min, and molecular weight distribution (Mw/Mn) was 7.4.

### Example 14

Example 10 was repeated, except that 9,9-bis(methoxymethyl)fluorene was used to substitute 2-isopentyl-2-isopropyl-1,3-dimethoxypropane.

Catalyst activity was 58.6Kg of PP per gram of solid catalyst component, and bulk density of the polymer was 0.43g/ml. Isotacticity index (I.I.) of the obtained polypropylene was found as 97.8%, melt index (M.I.) was found as 4.0g/10min, and molecular weight distribution (Mw/Mn) was 7.4.

### Example 15

Example 14 was repeated, except that no external electron donor was added during propylene polymerization.

Catalyst activity was 64.3Kg of PP per gram of solid catalyst component, and bulk density of the polymer was 0.40g/ml. Isotacticity index (I.I.) of the obtained polypropylene was found as 93.0%, melt index (M.I.) was found as 5.8g/10min, and molecular weight distribution (Mw/Mn) was 7.3.

### Example 16

### 1. Preparation of magnesium chloride solution:

To a 350ml glass reactor equipped with a stirrer, which was completely replaced with N₂, 200ml of ethanol was added. 9.5g of anhydrous magnesium chloride was added with stirring while controlling temperature inside the glass reactor not raising rapidly, then the temperature inside the glass reactor was slowly raised to about 60 °C, and the anhydrous magnesium chloride was well dissolved with stirring. After the anhydrous magnesium chloride was substantially dissolved, the system was held at that temperature for further 2.5 hours to form a magnesium chloride solution.

### 2. Preparation of composite carrier

To above solution was added 6g of fumed silica. Then the mixture was stirred for 1 hour at room temperature to form a slurry. Next, spray drying was carried out in a spray dryer with inlet temperature being controlled at 200 °C and outlet temperature being controlled at 130°C, to prepare a spheric composite carrier having an average particle size of about 18 microns.

### 3. Preparation of solid catalyst component

A solid catalyst component was prepared according to the procedure as described in Example 12.

### Propylene polymerization:

The procedure of propylene polymerization was same as that described in Example 8. Catalyst activity was 43.6Kg of PP per gram of solid catalyst component, and bulk density of the polymer was 0.42g/ml. Isotacticity index (I.I.) of the obtained polypropylene was found as 97.0%, melt index (M.I.) was found as 5.6g/10min, and molecular weight distribution (Mw/Mn) was 7.1.

### Comparative Example 1

### Preparation of catalyst component (no composite carrier of the present invention was used):

To a reactor, which was completely replaced with high pure N₂, were added successively 0.05mol of anhydrous magnesium chloride, 95ml of toluene, 0.05mol of epoxy chloropropane (ECP), and 0.046mol of tributyl phosphate (TBP). The mixture was heated to 50°C with stirring and held at the temperature for 2.5 hours to dissolve the solid completely, then 0.0095mol of phthalic anhydride was added, and the mixture was held at the temperature for further one hour. The solution was cooled to -25°C and 56ml of TiCl₄ was dropwise added over one hour, then the reaction mixture was slowly heated to 80°C. Solid was gradually precipitated during the heating. To the system was added 2g of 9,9-bis(methoxymethyl)fluorene, and the reaction was held at that temperature for further one hour. After filtration, the residue was washed with 100mlx2 of toluene for two times. A brownish solid precipitate was obtained. The resulting solid precipitate was treated with 60ml of toluene and 40ml of TiCl₄ at 90°C for 2 hours, and after removing the supernatant, the residue was treated again. After removing the supernatant, the residue was washed with 100mlx3 of toluene at 110 °C for three times, and 100mlx4 of hexane for four times, to yield a solid catalyst component.

### Propylene polymerization:

The procedure of propylene polymerization was same as that described in Example 9, except that polymerization time was 1 hour. Catalyst activity was 53.6Kg of PP per gram of solid catalyst component, and bulk density of the polymer was 0.44g/ml. Isotacticity index (I.I.) of the obtained polypropylene was found as 98.8%, melt index (M.I.) was found as 4.5g/10min, and molecular weight distribution (Mw/Mn) was 3.6.

It can be seen from above Examples that when used in propylene polymerization, a catalyst prepared by employing the composite carrier according to the present invention, the 1,3-diether compound and titanium compound as essential components not only exhibits high polymerization activity and high bulk density of polymer but remains characteristics of catalyst components using a 1,3-diether compound as internal electron donor, that is, the catalyst components have good response to hydrogen and an external electron donor is not necessary. In addition, the obtained polymer has a broader molecular weight distribution with Mw/Mn being larger than 7. If a catalyst is prepared by employing 1,3-diether compounds as internal electron donor yet no composite carrier according to the present invention, the obtained polymer has a narrower molecular weight distribution as shown in Comparative Example.

## Claims

1. A composite carrier of catalysts for propylene polymerization, comprising magnesium halide and silica material with an average particle size of less than 1 micron.

2. A composite carrier of catalysts for propylene polymerization, which is spheric particles obtainable by contacting magnesium halide with one or more electron donor compounds to form a solution, then mixing the solution with silica material with an average particle size of less than 1 micron to form a mixture, and drying the mixture through spray drying process.

3. The composite carrier according to claim 2, wherein the spheric particles have an average particle size of from 5 to 60 microns.

4. The composite carrier according to claim 3, wherein the spheric particles have an average particle size of from 10 to 40 microns.

5. The composite carrier according to claim 2, wherein the electron donor compound used during the preparation of the composite carrier is selected from the group consisting of optionally halogenated aliphatic or aromatic alcohols, aliphatic ethers, cyclic ethers, optionally halogenated aliphatic alkylene oxides, aliphatic ketones, alkyl esters of aliphatic or aromatic carboxylic acids, hydrocarbyl or halohydrocarbyl esters of phosphoric acid or phosphorous acid, and mixture thereof.

6. The composite carrier according to claim 5, wherein the electron donor compound is a system comprising at least one of optionally halogenated C₁₋₈ aliphatic alcohols and optionally halogenated C₇₋₁₀ aromatic alcohols.

7. The composite carrier according to claim 6, wherein the electron donor compound is at least one of optionally halogenated C₁₋₈ aliphatic alcohols and optionally halogenated C₇₋₁₀ aromatic alcohols, or a mixture of said alcohol with a C₁₋₆ aliphatic ether, a C₃₋₅ cyclic ether, or a C₁₋₆ alkyl ester of aliphatic or aromatic carboxylic acid.

8. The composite carrier according to claim 2, wherein molar ratio of the electron donor compound used during the preparation of the composite carrier to magnesium halide is in a range of from 3:1 to 50:1.

9. A composite carrier of catalysts for propylene polymerization, which is spheric particles obtainable by contacting magnesium chloride with an electron donor system consisting of an aliphatic alcohol and optionally an aliphatic ether, a cyclic ether, or an alkyl ester of aliphatic or aromatic carboxylic acid to form a solution, then mixing the solution with silica material having an average particle size of less than 1 micron to form a mixture, and drying the mixture through spray drying process.

10. The composite carrier according to claim 9, wherein molar ratio of the aliphatic alcohol to magnesium chloride is in a range of from 3:1 1 to 50:1, and molar ratio of the aliphatic ether, cyclic ether, or alkyl ester of aliphatic or aromatic carboxylic acid to magnesium chloride is in a range of from 0:1 to 20:1.

11. A catalyst component for propylene polymerization, comprising reaction product of the composite carrier according to any one of claims 1-10 and a titanium compound represented by formula Ti(OR²)₄₋ₘXₘ, in which R² group(s) is/are identical or different, and is/are C₁₋₁₄ aliphatic hydrocarbyl, X(s) is/are selected from the group consisting of F, Cl, Br and mixture thereof, m is an integer of from 1 to 4, wherein prior to, during, or after the reaction between the composite carrier and the titanium compound, the composite carrier is treated using an internal electron donor compound, wherein the internal electron donor compound is selected from the group consisting of esters of aliphatic polycarboxylic acid, esters of aromatic carboxylic acid, and 1,3-diether compounds having a general formula (I) 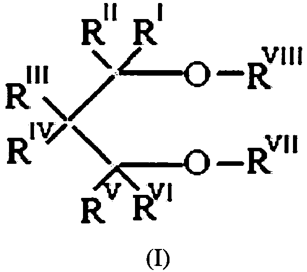 in which R^{I}, R^{II}, R^{III}, R^{IV}, R^{V} and R^{VI} are identical or different, and are selected from the group consisting of hydrogen, halogen, optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl, R^{VII} and R^{VIII} are identical or different, and are selected from the group consisting of optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl, and R^{I} - R^{VI} groups can be bonded each other to form a ring, and mixture thereof.

12. The catalyst component for propylene polymerization according to claim 11, wherein the internal electron donor compound is one or more selected from the group consisting of phthalates, malonates, succinates, glutarates, pivalates, and carbonates.

13. The catalyst component for propylene polymerization according to claim 11, wherein in the 1,3-diether compounds having a general formula (I), R^{III} and R^{IV} are bonded each other to form an unsaturated fused ring structure, and hydrogen atoms on said fused ring structure are optionally substituted by one or more groups selected from the group consisting of halogen, optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl.

14. The catalyst component for propylene polymerization according to claim 11, wherein the 1,3-diether compounds are compounds represented by a general formula (III) 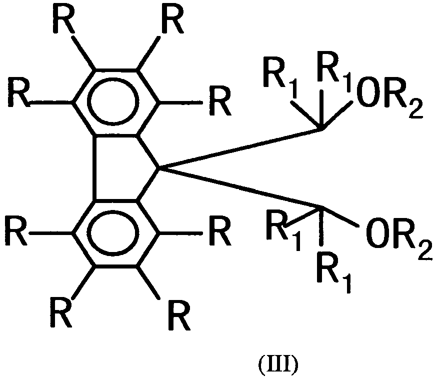 in which R groups are identical or different, and are selected from the group consisting of hydrogen, halogen, optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl;
R₁ groups are identical or different, and are selected from the group consisting of hydrogen, halogen, optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl;
R₂ groups are identical or different, and are selected from the group consisting of optionally halogenated linear or branched C₁-C₂₀ alkyl, optionally halogenated C₃-C₂₀ cycloalkyl, optionally halogenated C₆-C₂₀ aryl, optionally halogenated C₇-C₂₀ alkaryl and optionally halogenated C₇-C₂₀ aralkyl.

15. A catalyst component for propylene polymerization, which is obtainable through a process comprising the steps of:
(i) preparing spheric composite carrier by contacting magnesium halide with one or more electron donor compounds to form a solution, then mixing the solution with silica material having an average particle size of less than 1 micron to form a mixture, and drying the mixture through spray drying process;
(ii) reacting the composite carrier prepared in step (i) with a titanium compound represented by formula Ti(OR²)₄₋ₘXₘ, in which R² group(s) is/are identical or different, and is/are C₁₋₁₄ aliphatic hydrocarbyl, X(s) is/are selected from the group consisting of F, Cl, Br and mixture thereof, m is an integer of from 1 to 4, and
(iii) prior to, during, or after the reaction between the composite carrier and the titanium compound, treating the composite carrier with an internal electron donor compound selected from the group consisting of esters of aliphatic polycarboxylic acid, esters of aromatic carboxylic acid, and 1,3-diether compounds having a general formula (I) as defined in claim 11, and mixture thereof.

16. A catalyst component for propylene polymerization, which is obtainable through a process comprising the steps of:
(i) preparing spheric composite carrier by contacting magnesium chloride with an electron donor system consisting of an aliphatic alcohol and optionally an aliphatic ether, a cyclic ether or an alkyl ester of aliphatic or aromatic carboxylic acid to form a solution, then mixing the solution with silica material having an average particle size of less than 1 micron to form a mixture, and drying the mixture through spray drying process;
(ii) reacting the composite carrier prepared in step (i) with a titanium compound represented by formula Ti(OR²)₄₋ₘXₘ, in which R² group(s) is/are identical or different, and is/are C₁₋₁₄ aliphatic hydrocarbyl, X(s) is/are selected from the group consisting of F, Cl, Br and mixture thereof, and m is an integer of from 1 to 4, and
(iii) prior to, during, or after the reaction between the composite carrier and the titanium compound, treating the composite carrier with an internal electron donor compound selected from the group consisting of esters of aliphatic polycarboxylic acid, esters of aromatic carboxylic acid, and 1,3-diether compounds having a general formula (I) as defined in claim 11, and mixture thereof.

17. A catalyst for propylene polymerization, comprising reaction product of:
(i) the catalyst component according to any one of claims 11-16;
(ii) an alkyl aluminium compound; and
(iii) optionally, an external electron donor component.

18. The catalyst for propylene polymerization according to claim 17, wherein the alkyl aluminium compound is represented by formula AlR³ₙX₃₋ₙ, in which R³(s) is/are identical or different, and is/are linear, branched, or cyclic alkyl having 1 to 20 carbon atoms, X(s) is/are halogen, n=1, 2 or 3.

19. The catalyst for propylene polymerization according to claim 18, wherein the external electron donor component is an organosilicone compound represented by formula R⁴ₙSi(OR⁵)₄₋ₙ in which n is in a range of from 0 to 3 inclusive, R⁴(s) and R⁵(s) are identical or different, and are alkyl, cycloalkyl, aryl, haloalkyl, R⁴(s) can also be halogen or hydrogen atom.

20. The catalyst for propylene polymerization according to claim 19, wherein ratio of solid catalyst component (i) to alkyl aluminium compound component (ii) to external electron donor component (iii) is in a range of 1:5 to 1000:0 to 500, calculated on molar basis of titanium, aluminium and silicone.

## Patentansprüche

1. Verbundträger von Katalysatoren für die Propylenpolymerisation, umfassend Magnesiumhalogenid und Siliciumdioxid-Material mit einer mittleren Teilchengröße von weniger als 1 Mikron.

2. Verbundträger von Katalysatoren für die Propylenpolymerisation, bei dem es sich um kugelförmige Teilchen handelt, die durch Inberührungbringen von Magnesiumhalogenid mit einer oder mehreren Elektronendonatorverbindungen zur Bildung einer Lösung, anschließendes Mischen der Lösung mit Siliciumdioxidmaterial mit einer mittleren Teilchengröße von weniger als 1 Mikron zur Bildung einer Mischung und Trocknen der Mischung durch ein Sprühtrocknungsverfahren erhältlich sind.

3. Verbundträger nach Anspruch 2, wobei die kugelförmigen Teilchen eine mittlere Teilchengröße von 5 bis 60 Mikron aufweisen.

4. Verbundträger nach Anspruch 3, wobei die kugelförmigen Teilchen eine mittlere Teilchengröße von 10 bis 40 Mikron aufweisen.

5. Verbundträger nach Anspruch 2, wobei die bei der Herstellung des Verbundträgers verwendete Elektronendonatorverbindung aus der Gruppe bestehend aus gegebenenfalls halogenierten aliphatischen oder aromatischen Alkoholen, aliphatischen Ethern, cyclischen Ethern, gegebenenfalls halogenierten aliphatischen Alkylenoxiden, aliphatischen Ketonen, Alkylestern von aliphatischen oder aromatischen Carbonsäuren, Hydrocarbyl- oder Halogenhydrocarbylestern von Phosphorsäure oder Phosphonsäure und Mischungen davon ausgewählt ist.

6. Verbundträger nach Anspruch 5, wobei es sich bei der Elektronendonatorverbindung um ein System handelt, das gegebenenfalls halogenierte aliphatische C₁₋₈-Alkohole und/oder gegebenenfalls halogenierte aromatische C₇₋₁₀-Alkohole umfasst.

7. Verbundträger nach Anspruch 6, wobei es sich bei der Elektronendonatorverbindung um gegebenenfalls halogenierte aliphatische C₁₋₈-Alkohole und/oder gegebenenfalls halogenierte aromatische C₇₋₁₀-Alkohole oder eine Mischung des Alkohols mit einem aliphatischen C₁₋₆-Ether, einem cyclischen C₃₋₅-Ether oder einem C₁₋₆-Alkylester einer aliphatischen oder aromatischen Carbonsäure handelt.

8. Verbundträger nach Anspruch 2, wobei das Molverhältnis von bei der Herstellung des Verbundträgers verwendeter Elektronendonatorverbindung zu Magnesiumhalogenid in einem Bereich von 3:1 bis 50:1 liegt.

9. Verbundträger von Katalysatoren für die Propylenpolymerisation, bei dem es sich um kugelförmige Teilchen handelt, die durch Inberührungbringen von Magnesiumchlorid mit einem Elektronendonatorsystem, das aus einem aliphatischen Alkohol und gegebenenfalls einem aliphatischen Ether, einem cyclischen Ether oder einem Alkylester einer aliphatischen oder aromatischen Carbonsäure besteht, zur Bildung einer Lösung, anschließendes Mischen der Lösung mit Siliciumdioxidmaterial mit einer mittleren Teilchengröße von weniger als 1 Mikron zur Bildung einer Mischung und Trocknen der Mischung durch ein Sprühtrocknungsverfahren erhältlich sind.

10. Verbundträger nach Anspruch 9, wobei das Molverhältnis von aliphatischem Alkohol zu Magnesiumchlorid in einem Bereich von 3:1 bis 50:1 liegt und das Molverhältnis von aliphatischem Ether, cyclischem Ether oder Alkylester einer aliphatischen oder aromatischen Carbonsäure zu Magnesiumchlorid in einem Bereich von 0:1 bis 20:1 liegt.

11. Katalysatorkomponente für die Propylenpolymerisation, umfassend Reaktionsprodukt des Verbundträgers nach einem der Ansprüche 1-10 und eine Titanverbindung der Formel Ti(OR²)₄₋ₘXₘ, in der die Gruppe(n) R² gleich oder verschieden ist/sind und für aliphatisches C₁₋₁₄-Hydrocarbyl steht/stehen, die Gruppe (n) X aus der Gruppe bestehend aus F, Cl, Br und einer Mischung davon ausgewählt ist/sind, m für eine ganze Zahl von 1 bis 4 steht, wobei der Verbundträger vor, während oder nach der Reaktion zwischen dem Verbundträger und der Titanverbindung unter Verwendung einer internen Elektronendonatorverbindung behandelt wird, wobei die interne Elektronendonatoverbindung aus der Gruppe bestehend aus Estern einer aliphatischen Polycarbonsäure, Estern einer aromatischen Carbonsäure und 1,3-Dietherverbindungen der allgemeinen Formel (I) 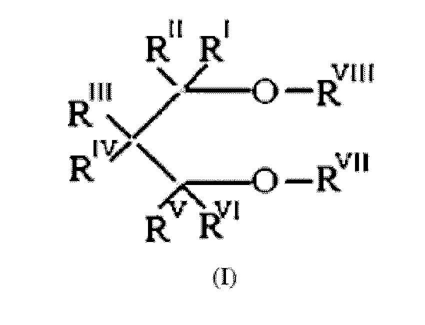 in der R^{I}, R^{II}, R^{III}, R^{IV}, R^{V} und R^{VI} gleich oder verschieden sind und aus der Gruppe bestehend aus Wasserstoff, Halogen, gegebenenfalls halogeniertem linearem oder verzweigtem C₁-C₂₀-Alkyl, gegebenenfalls halogeniertem C₃-C₂₀-Cycloalkyl, gegebenenfalls halogeniertem C₆-C₂₀-Aryl, gegebenenfalls halogeniertem C₇-C₂₀-Alkaryl und gegebenenfalls halogeniertem C₇-C₂₀-Aralkyl ausgewählt sind, R^{VII} und R^{VIII} gleich oder verschieden sind und aus der Gruppe bestehend aus gegebenenfalls halogeniertem linearem oder verzweigtem C₁-C₂₀-Alkyl, gegebenenfalls halogeniertem C₃-C₂₀-Cycloalkyl, gegebenenfalls halogeniertem C₆-C₂₀-Aryl, gegebenenfalls halogeniertem C₇-C₂₀-Alkaryl und gegebenenfalls halogeniertem C₇-C₂₀-Aralkyl ausgewählt sind und die Gruppen R^{I} - R^{VI} unter Bildung eines Rings aneinander gebunden sein können, und Mischungen davon ausgewählt ist.

12. Katalysatorkomponente für die Propylenpolymerisation nach Anspruch 11, wobei es sich bei der internen Elektronendonatoverbindung um eine oder mehrere Verbindungen aus der Gruppe bestehend aus Phthalaten, Malonaten, Succinaten, Glutaraten, Pivalaten und Carbonaten handelt.

13. Katalysatorkomponente für die Propylenpolymerisation nach Anspruch 11, wobei in den 1,3-Dietherverbindungen mit der allgemeinen Formel (I) R^{III} und R^{IV} unter Bildung einer ungesättigten kondensierten Ringstruktur aneinander gebunden sind und Wasserstoffatome an der kondensierten Ringstruktur gegebenenfalls durch eine oder mehrere Gruppen aus der Gruppe bestehend aus Halogen, gegebenenfalls halogeniertem linearem oder verzweigtem C₁-C₂₀-Alkyl, gegebenenfalls halogeniertem C₃-C₂₀-Cycloalkyl, gegebenenfalls halogeniertem C₆-C₂₀-Aryl, gegebenenfalls halogeniertem C₇-C₂₀-Alkaryl und gegebenenfalls halogeniertem C₇-C₂₀-Aralkyl substituiert sind.

14. Katalysatorkomponente für die Propylenpolymerisation nach Anspruch 11, wobei es sich bei den 1,3-Dietherverbindungen um Verbindungen der allgemeinen Formel (III) 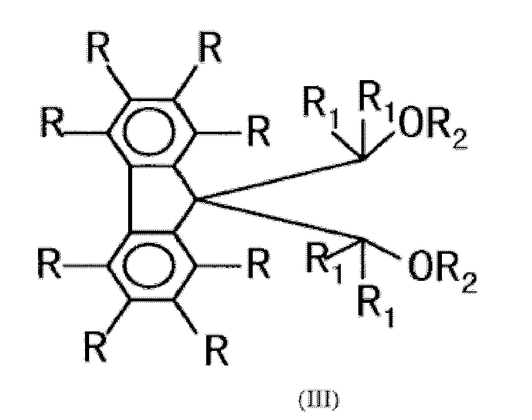 in der Gruppen R gleich oder verschieden sind und aus der Gruppe bestehend aus Wasserstoff, Halogen, gegebenenfalls halogeniertem linearem oder verzweigtem C₁-C₂₀-Alkyl, gegebenenfalls halogeniertem C₃-C₂₀-Cycloalkyl, gegebenenfalls halogeniertem C₆-C₂₀-Aryl, gegebenenfalls halogeniertem C₇-C₂₀-Alkaryl und gegebenenfalls halogeniertem C₇-C₂₀-Aralkyl ausgewählt sind; Gruppen R₁ gleich oder verschieden sind und aus der Gruppe bestehend aus Wasserstoff, Halogen, gegebenenfalls halogeniertem linearem oder verzweigtem C₁-C₂₀-Alkyl, gegebenenfalls halogeniertem C₃-C₂₀-Cycloalkyl, gegebenenfalls halogeniertem C₆-C₂₀-Aryl, gegebenenfalls halogeniertem C₇-C₂₀-Alkaryl und gegebenenfalls halogeniertem C₇-C₂₀-Aralkyl ausgewählt sind; Gruppen R₂ gleich oder verschieden sind und aus der Gruppe bestehend aus gegebenenfalls halogeniertem linearem oder verzweigtem C₁-C₂₀-Alkyl, gegebenenfalls halogeniertem C₃-C₂₀-Cycloalkyl, gegebenenfalls halogeniertem C₆-C₂₀-Aryl, gegebenenfalls halogeniertem C₇-C₂₀-Alkaryl und gegebenenfalls halogeniertem C₇-C₂₀-Aralkyl ausgewählt sind;
handelt.

15. Katalysatorkomponente für die Propylenpolymerisation, die durch ein Verfahren erhältlich ist, bei dem man:
(i) durch Inberührungbringen von Magnesiumhalogenid mit einer oder mehreren Elektronendonatorverbindungen zur Bildung einer Lösung, anschließendes Mischen der Lösung mit Siliciumdioxidmaterial mit einer mittleren Teilchengröße von weniger als 1 Mikron zur Bildung einer Mischung und Trocknen der Mischung durch ein Sprühtrocknungsverfahren einen kugelförmigen Verbundträger herstellt;
(ii) den in Schritt (i) hergestellten Verbundträger mit einer Titanverbindung der Formel Ti(OR²)₄₋ₘXₘ, in der die Gruppe (n) R² gleich oder verschieden ist/sind und für aliphatisches C₁₋₁₄-Hydrocarbyl steht/stehen, die Gruppe(n) X aus der Gruppe bestehend aus F, Cl, Br und einer Mischung davon ausgewählt ist/sind, m für eine ganze Zahl von 1 bis 4 steht, umsetzt und
(iii) den Verbundträger vor, während oder nach der Reaktion zwischen dem Verbundträger und der Titanverbindung mit einer internen Elektronendonatorverbindung aus der Gruppe bestehend aus Estern einer aliphatischen Polycarbonsäure, Estern einer aromatischen Carbonsäure und 1,3-Dietherverbindungen der allgemeinen Formel (I) gemäß Anspruch 11 und Mischungen davon behandelt.

16. Katalysatorkomponente für die Propylenpolymerisation, die durch ein Verfahren erhältlich ist, bei dem man:
(i) durch Inberührungbringen von Magnesiumchlorid mit einem Elektronendonatorsystem, das aus einem aliphatischen Alkohol und gegebenenfalls einem aliphatischen Ether, einem cyclischen Ether oder einem Alkylester einer aliphatischen oder aromatischen Carbonsäure besteht, zur Bildung einer Lösung, anschließendes Mischen der Lösung mit Siliciumdioxidmaterial mit einer mittleren Teilchengröße von weniger als 1 Mikron zur Bildung einer Mischung und Trocknen der Mischung durch ein Sprühtrocknungsverfahren einen kugelförmigen Verbundträger herstellt;
(ii) den in Schritt (i) hergestellten Verbundträger mit einer Titanverbindung der Formel Ti(OR²)₄₋ₘXₘ, in der die Gruppe (n) R² gleich oder verschieden ist/sind und für aliphatisches C₁₋₁₄-Hydrocarbyl steht/stehen, die Gruppe(n) X aus der Gruppe bestehend aus F, Cl, Br und einer Mischung davon ausgewählt ist/sind, und m für eine ganze Zahl von 1 bis 4 steht, umsetzt und
(iii) den Verbundträger vor, während oder nach der Reaktion zwischen dem Verbundträger und der Titanverbindung mit einer internen Elektronendonatorverbindung aus der Gruppe bestehend aus Estern einer aliphatischen Polycarbonsäure, Estern einer aromatischen Carbonsäure und 1,3-Dietherverbindungen der allgemeinen Formel (I) gemäß Anspruch 11 und Mischungen davon behandelt.

17. Katalysator für die Propylenpolymerisation, umfassend Reaktionsprodukt von:
(i) der Katalysatorkomponente nach einem der Ansprüche 11-16;
(ii) einer Alkylaluminiumverbindung und
(iii) gegebenenfalls einer externen Elektronendonatorkomponente.

18. Katalysator für die Propylenpolymerisation nach Anspruch 17, wobei die Alkylaluminiumverbindung durch die Formel AlR³ₙX₃₋ₙ wiedergegeben wird, in der die Gruppe(n) R³ gleich oder verschieden ist/sind und für lineares, verzweigtes oder cyclisches Alkyl mit 1 bis 20 Kohlenstoffatomen steht/stehen, die Gruppe(n) X für Halogen steht/stehen, n = 1, 2 oder 3.

19. Katalysator für die Propylenpolymerisation nach Anspruch 18, wobei es sich bei der externen Elektronendonatorkomponente um eine Organosiliciumverbindung der Formel R⁴ₙSi(OR⁵)₄₋ₙ handelt, in der n in einem Bereich von 0 bis 3 inklusive liegt, die Gruppe (n) R⁴ und R⁵ gleich oder verschieden sind und für Alkyl, Cycloalkyl, Aryl, Halogenalkyl stehen, wobei die Gruppe(n) R⁴ auch für ein Halogen- oder Wasserstoffatom stehen kann/können.

20. Katalysator für die Propylenpolymerisation nach Anspruch 19, wobei das Verhältnis von fester Katalysatorkomponente (i) zu Alkylaluminiumverbindungskomponente (ii) zu externer Elektronendonatorkomponente (iii) in einem Bereich von 1:5 bis 1000:0 bis 500, berechnet auf molarer Basis von Titan, Aluminium und Silicium, liegt.

## Revendications

1. Support composite de catalyseurs pour la polymérisation de propylène, comprenant un halogénure de magnésium et un matériau de silice ayant une taille de particule moyenne inférieure à 1 micron.

2. Support composite de catalyseurs pour la polymérisation de propylène, qui est constitué de particules sphériques pouvant être obtenues par mise en contact d'un halogénure de magnésium avec un ou plusieurs composés donneurs d'électron pour former une solution, puis mélange de la solution avec un matériau de silice ayant une taille de particule moyenne inférieure à 1 micron pour former un mélange, et séchage du mélange par un procédé de séchage par pulvérisation.

3. Support composite selon la revendication 2, dans lequel les particules sphériques ont une taille de particule moyenne de 5 à 60 microns.

4. Support composite selon la revendication 3, dans lequel les particules sphériques ont une taille de particule moyenne de 10 à 40 microns.

5. Support composite selon la revendication 2, dans lequel le composé donneur d'électron utilisé pendant la préparation du support composite est choisi dans le groupe constitué d'alcools aliphatiques ou aromatiques facultativement halogénés, éthers aliphatiques, éthers cycliques, oxydes d'alkylène aliphatique facultativement halogénés, cétones aliphatiques, esters d'alkyle d'acides carboxyliques aliphatiques ou aromatiques, esters d'hydrocarbyle ou d'halogénohydrocarbyle d'acide phosphorique ou acide phosphoreux, et un mélange de ceux-ci.

6. Support composite selon la revendication 5, dans lequel le composé donneur d'électron est un système comprenant au moins l'un parmi des alcools aliphatiques en C₁₋₈ facultativement halogénés et des alcools aromatiques en C₇₋₁₀ facultativement halogénés.

7. Support composite selon la revendication 6, dans lequel le composé donneur d'électron est au moins l'un parmi des alcools aliphatiques en C₁₋₈ facultativement halogénés et des alcools aromatiques en C₇₋₁₀ facultativement halogénés, ou un mélange dudit alcool avec un éther aliphatique en C₁₋₆, un éther cyclique en C₃₋₅, ou un ester d'alkyle en C₁₋₆ d'acide carboxylique aliphatique ou aromatique.

8. Support composite selon la revendication 2, dans lequel le rapport molaire de composé donneur d'électron utilisé pendant la préparation du support composite à l'halogénure de magnésium est dans une plage de 3:1 à 50:1.

9. Support composite de catalyseurs pour la polymérisation de propylène, qui est constitué de particules sphériques pouvant être obtenues par mise en contact de chlorure de magnésium avec un système de donneur d'électron constitué d'un alcool aliphatique et facultativement d'un éther aliphatique, un éther cyclique, ou un ester d'alkyle d'acide carboxylique aliphatique ou aromatique pour former une solution, puis mélange de la solution avec un matériau de silice ayant une taille de particule moyenne inférieure à 1 micron pour former un mélange, et séchage du mélange par un procédé de séchage par pulvérisation.

10. Support composite selon la revendication 9, dans lequel le rapport molaire de l'alcool aliphatique au chlorure de magnésium est dans une plage de 3:1 à 50:1, et le rapport molaire de l'éther aliphatique, l'éther cyclique, ou l'ester d'alkyle d'acide carboxylique aliphatique ou aromatique au chlorure de magnésium est dans une plage de 0:1 à 20:1.

11. Composant catalyseur pour la polymérisation de propylène, comprenant le produit de réaction du support composite selon l'une quelconque des revendications 1 à 10 et d'un composé de titane représenté par la formule Ti(OR²)₄₋ₘXₘ, dans lequel un/des groupe (s) est/sont identiques ou différents, et est/sont un hydrocarbyle aliphatique en C₁₋₁₄, X est/sont choisis dans le groupe constitué de F, Cl, Br et un mélange de ceux-ci, m est un entier de 1 à 4, dans lequel avant, pendant, ou après la réaction entre le support composite et le composé de titane, le support composite est traité en utilisant un composé donneur d'électron interne, le composé donneur d'électron interne étant choisi dans le groupe constitué d'esters d'acide polycarboxylique aliphatique, d'esters d'acide carboxylique aromatique, et des composés 1,3-diéther ayant une formule générale (I) 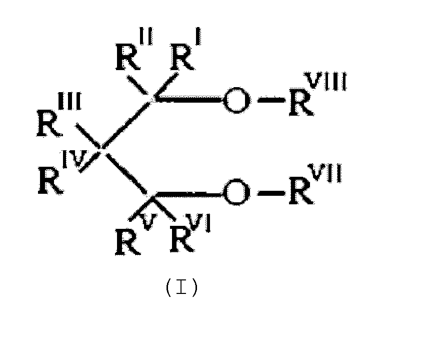 dans laquelle R^{I}, R^{II}, R^{III}, R^{IV}, R^{V} et R^{VI} sont identiques ou différents, et sont choisis dans le groupe constitué d'hydrogène, halogène, alkyle en C₁-C₂₀ linéaire ou ramifié facultativement halogéné, cycloalkyle en C₃-C₂₀ facultativement halogéné, aryle en C₆-C₂₀ facultativement halogéné, alkylaryle en C₇-C₂₀ facultativement halogéné aralkyle en C₇-C₂₀ facultativement halogéné, R^{VII} et R^{VIII} sont identiques ou différents, et sont choisis dans le groupe constitué d'alkyle en C₁-C₂₀ linéaire ou ramifié facultativement halogéné, cycloalkyle en C₃-C₂₀ facultativement halogéné, aryle en C₆-C₂₀ facultativement halogéné, alkylaryle en C₇-C₂₀ facultativement halogéné aralkyle en C₇-C₂₀ facultativement halogéné, et les groupes R^{I} à R^{VI} peuvent être liés mutuellement pour former un cycle, et un mélange de ceux-ci.

12. Composant catalyseur pour la polymérisation de propylène selon la revendication 11, dans lequel le composé donneur d'électron interne est l'un ou plusieurs choisis dans le groupe constitué de phtalates, malonates, succinates, glutarates, pivalates, et carbonates.

13. Composant catalyseur pour la polymérisation de propylène selon la revendication 11, dans lequel, dans les composés 1,3-diéther ayant une formule générale (I), R^{III} et R^{IV} sont liés mutuellement pour former une structure cyclique condensée insaturée, et les atomes d'hydrogène sur ladite structure cyclique condensée sont facultativement substitués par un ou plusieurs groupes choisis dans le groupe constitué d'halogène, alkyle en C₁-C₂₀ linéaire ou ramifié facultativement halogéné, cycloalkyle en C₃-C₂₀ facultativement halogéné, aryle en C₆-C₂₀ facultativement halogéné, alkylaryle en C₇-C₂₀ facultativement halogéné, aralkyle en C₇-C₂₀ facultativement halogéné.

14. Composant catalyseur pour la polymérisation de propylène selon la revendication 11, dans lequel les composés 1,3-diéther sont des composés représenté par une formule générale (III) 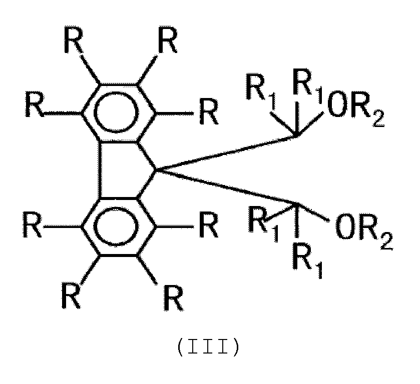 dans lequel les groupes R sont identiques ou différents, et sont choisis dans le groupe constitué d'hydrogène, halogène, alkyle en C₁-C₂₀ linéaire ou ramifié facultativement halogéné, cycloalkyle en C₃-C₂₀ facultativement halogéné, aryle en C₆-C₂₀ facultativement halogéné, alkylaryle en C₇-C₂₀ facultativement halogéné aralkyle en C₇-C₂₀ facultativement halogéné ;
les groupes R₁ sont identiques ou différents, et sont choisis dans le groupe constitué d'hydrogène, halogène, alkyle en C₁-C₂₀ linéaire ou ramifié facultativement halogéné, cycloalkyle en C₃-C₂₀ facultativement halogéné, aryle en C₆-C₂₀ facultativement halogéné, alkylaryle en C₇-C₂₀ facultativement halogéné aralkyle en C₇-C₂₀ facultativement halogéné ;
les groupes R₂ sont identiques ou différents, et sont choisis dans le groupe constitué d'alkyle en C₁-C₂₀ linéaire ou ramifié facultativement halogéné, cycloalkyle en C₃-C₂₀ facultativement halogéné, aryle en C₆-C₂₀ facultativement halogéné, alkylaryle en C₇-C₂₀ facultativement halogéné aralkyle en C₇-C₂₀ facultativement halogéné.

15. Composant catalyseur pour la polymérisation de propylène, qui peut être obtenu par un procédé comprenant les étapes de :
(i) préparation d'un support composite sphérique par mise en contact d'un halogénure de magnésium avec un ou plusieurs composés donneurs d'électron pour former une solution, puis mélange de la solution avec un matériau de silice ayant une taille de particule moyenne inférieure à 1 micron pour former un mélange, et séchage du mélange par un procédé de séchage par pulvérisation ;
(ii) réaction du support composite préparé dans l'étape (i) avec un composé de titane représenté par la formule Ti(OR²)₄₋ₘXₘ, dans laquelle le (s) groupe (s) R est/sont identiques ou différents, et est/sont un hydrocarbyle aliphatique en C₁₋₁₄, X est/sont choisis dans le groupe constitué de F, Cl, Br et un mélange de ceux-ci, m est un entier de 1 à 4, et
(iii) avant, pendant ou après la réaction entre le support composite et le composé de titane, traitement du support composite avec un composé donneur d'électron interne choisi dans le groupe constitué d'esters d'acide polycarboxylique aliphatique, esters d'acide carboxylique aromatique, et composés 1,3-diéther ayant une formule générale (I) telle que définie dans la revendication 11, et un mélange de ceux-ci.

16. Composant catalyseur pour la polymérisation de propylène, qui peut être obtenu par un procédé comprenant les étapes de :
(i) préparation d'un support composite sphérique par mise en contact de chlorure de magnésium avec un système de donneur d'électron constitué d'un alcool aliphatique et facultativement d'un éther aliphatique, un éther cyclique ou un ester d'alkyle d'acide carboxylique aliphatique ou aromatique pour former une solution, puis mélange de la solution avec un matériau de silice ayant une taille de particule moyenne inférieure à 1 micron pour former un mélange, et séchage du mélange par un procédé de séchage par pulvérisation ;
(ii) réaction du support composite préparé dans l'étape (i) avec un composé de titane représenté par la formule Ti(OR²)₄₋ₘXₘ, dans laquelle le (s) groupe (s) R est/sont identiques ou différents, et est/sont un hydrocarbyle aliphatique en C₁₋₁₄, X est/sont choisis dans le groupe constitué de F, Cl, Br et un mélange de ceux-ci, m est un entier de 1 à 4, et
(iii) avant, pendant ou après la réaction entre le support composite et le composé de titane, traitement du support composite avec un composé donneur d'électron interne choisi dans le groupe constitué d'esters d'acide polycarboxylique aliphatique, esters d'acide carboxylique aromatique, et composés 1,3-diéther ayant une formule générale (I) telle que définie dans la revendication 11, et un mélange de ceux-ci.

17. Catalyseur pour la polymérisation de propylène, comprenant le produit de réaction de :
(i) le composant catalyseur selon l'une quelconque des revendications 11 à 16 ;
(ii) un composé alkyl-aluminium ; et
(iii) facultativement, un composant donneur d'électron externe.

18. Catalyseur pour la polymérisation de propylène selon la revendication 17, dans laquelle le composé alkyl-aluminium est représenté par la formule AlR³ₙX₃₋ₙ, dans laquelle R₃ est/sont identiques ou différents, et est/sont un alkyle linéaire, ramifié, ou cyclique ayant de 1 à 20 atomes de carbone, X est/sont halogène, n = 1, 2 ou 3.

19. Catalyseur pour la polymérisation de propylène selon la revendication 18, dans lequel le composant donneur d'électron externe est un composé organosilicone représenté par la formule R⁴ₙSi(OR⁵)₄₋ₙ dans laquelle n est dans une plage de 0 à 3 inclus, R⁴ et R⁵ sont identiques ou différents, et sont alkyle, cycloalkyle, aryle, halogénoalkyle, R⁴ peuvent également être un atome d'halogène ou d'hydrogène.

20. Catalyseur pour la polymérisation de propylène selon la revendication 19, dans lequel le rapport du composant catalyseur solide (i) au composant de composé alkyl-aluminium (ii) au composant donneur d'électron externe (iii) est dans une plage de 1:5 à 1000:0 à 500, calculé sur une base molaire de titane, d'aluminium et de silicone.
